Europäisches Patentamt

(18) European Patent Office

Office européen des brevets

(11) Publication number: **0 155 746**
**B1**

# EUROPEAN PATENT SPECIFICATION

(45) Date of publication of patent specification: **30.03.88**

(51) Int. Cl.⁴: **G 11 B 5/48,** G 11 B 5/60

(21) Application number: **85300130.3**

(22) Date of filing: **09.01.85**

(54) Arch flexure for winchester sliders.

(30) Priority: **26.01.84 US 573982**

(43) Date of publication of application:
**25.09.85 Bulletin 85/39**

(45) Publication of the grant of the patent:
**30.03.88 Bulletin 88/13**

(84) Designated Contracting States:
**BE DE FR GB IT NL**

(56) References cited:
**EP-A-0 007 401**
**DE-A-2 003 372**
**US-A-3 599 193**
**US-A-3 668 668**
**US-A-3 931 641**

**IBM TECHNICAL DISCLOSURE BULLETIN, vol.
26, no. 6,November 1983, New York, USA; J.H.
NAYAK "Head suspension assemblies with
internally preloaded dimple", pages 2920-2921**

(73) Proprietor: **MEMOREX CORPORATION
San Tomas at Central Expressway
Santa Clara California 95052 (US)**

(72) Inventor: **Verdone, Michael A.
20 Shady Lane
Hillsborough California 94010 (US)**

(74) Representative: **Kirby, Harold Douglas Benson
et al
G.F. Redfern & Company Marlborough Lodge 14
Farncombe Road
Worthing West Sussex BN11 2BT (GB)**

## Description

This invention relates to an arrangement for mounting magnetic recording transducers and particularly for improved flexure mounts for "Winchester sliders" adapted for magnetic disk recording.

Background, Problems:

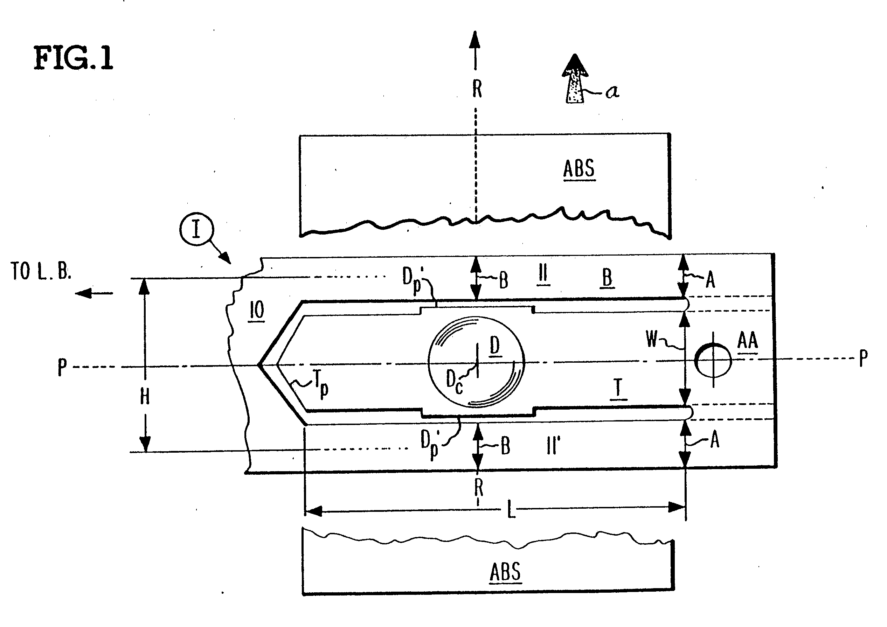

FIG. 1 shows, in plan view, a somewhat conventional flexure mounting I for mounting an air-bearing slider ABS of a type well known in the art of high-speed, high-density magnetic recording on disk media. Workers in the art recognize that random access, magnetic disk storage systems typically use read/write transducers mounted on an air-bearing slider such as slider ABS (in partial outline in FIG. 1, and understood as adapted to be "flown" over a disk recording surface).

Flexure mount I is classically intended to accommodate optimum slider orientation during acceleration/deceleration of the adjacent disk surface, and during negotiation of disk surface irregularities ("asperities" or microscopic variances from perfect surface flatness and smoothness). Such a flexure I will be understood as attached to a conventional load beam LB (not shown, but well known in the art, e.g., being spot-welded thereto). The load beam, in turn, is fastened to an actuator arm which supports an entire "head-arm assembly" (HAA) above a subject disk surface.

Flexure I comprises a relatively flat, thin flexure leaf 10 projected out from supporting load beam LB to terminate at a free distal tip portion AA. A central, separately-flexing tongue portion T is cantilevered back from tip AA, the flexure 10 being cut-out to accommodate tongue T, as known in the art. Tongue T includes a dimple D for attachment of slider ABS as known in the art. A pair of like, relatively rectangular flexure beam-segments 11, 11' surround tongue T, connecting tip AA to the flexure body 10.

This somewhat conventional flexure design I might be characterized as "rectangular", since it presents parallel rectangular beam-segments 11, 11' supporting flexure tip AA. Tongue T will be understood as offset from the plane of the flexure body, being "tilted" (e.g., about 2°) above the parallel beam segments 11, 11'. Tongue T has a relatively complex shape, being somewhat rectangular at its supported, end adjacent tip AA, and being widened somewhat about dimple D in a pair of like symmetrical rectangular protrusions $D_p$, $D_{p'}$ and terminating at a tongue tip $T_p$, which is somewhat pointed.

As workers know, the load beam force, the slider design and the disk velocity will, together, determine "flying height" (i.e., head-to-disk separation, a very important parameter-value, as workers well known). Workers will recognize that a good flexure will serve to attach the slider to the head-arm assembly, and to maintain relatively constant slider orientation relative to the passing disk surface (passing in direction "a" — see arrow) despite disk acceleration/deceleration and passing disk asperities — and, important, it should help resist excessive "pitch" or "roll" of its slider. (Here, a pitch-axis P—P is indicated in FIG. 1 extending along load-beam direction, (elongate tongue axis), through the center-point $D_c$ of the slider dimple D (the "loading point"). Also, a "roll axis" R—R will be recognized as passing through this same center-point $D_c$ but transverse to P—P, and in the direction a of slider flight, as known in the art.

Workers will recognize that some problems and disadvantages inhere in a "rectangular" flexure design, such as in FIG. 1. For instance, the tongue T is somewhat problematic to manufacture, there being insufficient material about dimple D to accommodate the "dimpling" without distorting tongue-thickness or T-flatness. Also, this design leaves something to be desired in respect of bonding to slider ABS, since it presents only a small "point-contact" $D_c$ for joining slider to flexure T (between the dimple-center $D_c$ and the back-face of slider ABS).

Bonding is further complicated by the relatively narrow clearance about tongue T and the difficulty of disposing of surplus adhesive during slider bonding. This adhesive is quite apt to "bridge" the relatively narrow clearance and bar, or interfere with, tongue flex. Also, air pockets are apt to develop in the adhesive mass.

Further, this tiny clearance about tongue T prevents one from using convenient, inexpensive die-stamping methods to form the part. Instead, one typically must turn to a costly chemical-etch method (apt to cause stress corrosion and metal fatigue, especially where an etchant residue is left).

And there are performance shortcomings too. This "rectangular" flexure construction and its rectangular flexure beams 11, 11' seem in many instances to provide inadequate "pitch stiffness" (resistance to pitch), especially during extreme stop-start operations (high acceleration or deceleration of the associated disk surface). Further, the moment through the "load point" (center $D_c$ of dimple D) along roll axis R—R is apt to be all too non-uniformly distributed, leading to an imbalance that allows one slider rail to come closer to the passing disk surface than the other (non-uniform "roll compliance").

Such a "roll bias" is characteristic of virtually all conventional flexures and presents serious disadvantages. For instance, workers recognize how it typically makes one slider rail fly at a seriously-different height from the other (e.g., variations of 25—40% are not uncommon — something quite undesirable).

IBM Technical Disclosure Bulletin, Vol. 26, No. 6, November 1983 New York, USA, pages 2920—2921 disclose a head suspension assembly with an internally preloaded dimple. According to this disclosure the contact force between the flexure dimple and the suspension is increased by introducing an internal preload without altering the final geometry of the suspension assembly.

The invention provides a flexure mount for carrying a magnetic recording transducer body adapted to be brought into operative relation with a passing record surface, this mount comprising an elongate flexure strip (20) having a distal tip (2—AA), a tongue section (TT) cantilevered back from this tip, and a pair of like beam-segments (21, 21') flanking the tongue section to join said tip to the proximate end of the mount, said tongue section being provided with a dimple (DD) to which said transducer body (ABS) is attached by means of adhesive, characterised in that said beam-segments are each necked-down identically intermediate their length, to exhibit a minimum width along an axis (R—R) through the centre of said dimple transverse to a length axis (L) of said flexure strip, whereby any predisposition for said transducer body to rotate in either direction about said axis is reduced.

A flexure mount in accordance with the invention will be seen to be cheaper and easier to fabricate, to exhibit greater pitch-stiffness, and to better balance the slider in the roll direction (more uniform "roll compliance"; little or no "roll bias", with less than 5—10% "slider-height" differential commonly seen).

Workers will recognize this as important. It can accommodate faster access times and increased track density (requiring wider servo band widths) — things much desired in present day magnetic recording.

Workers will recognize that the vibrational modes of a slider flexure (and like suspension components) should be as "stable" as possible throughout all normal operations of the disk drive (e.g., be constructed to exhibit resonance frequencies that are higher than any encountered in normal operation). Now as vibration frequency increases, (e.g., from nearby motors) one must typically increase component stiffness. "Arch Flexures" made according to this invention are more stable and have increased "pitch stiffness".

Brief Description of the Drawings:

These and other features and advantages of the present invention will be appreciated by workers as they become better understood by reference to the following detailed description of the present preferred embodiments which should be considered in conjunction with the accompanying drawings, wherein like reference symbols denote like elements:

FIG. 1 shows in plan schematic view a relatively conventional flexure mounting for a magnetic recording "slider";

FIG. 2 is a like view of such a flexure modified according to the invention;

FIG. 3 is a like view — greatly simplified — of another, less desirable flexure not in accordance with the invention; and

FIG. 4 is a like view of a flexure as shown in Fig. 3 modified according to the invention.

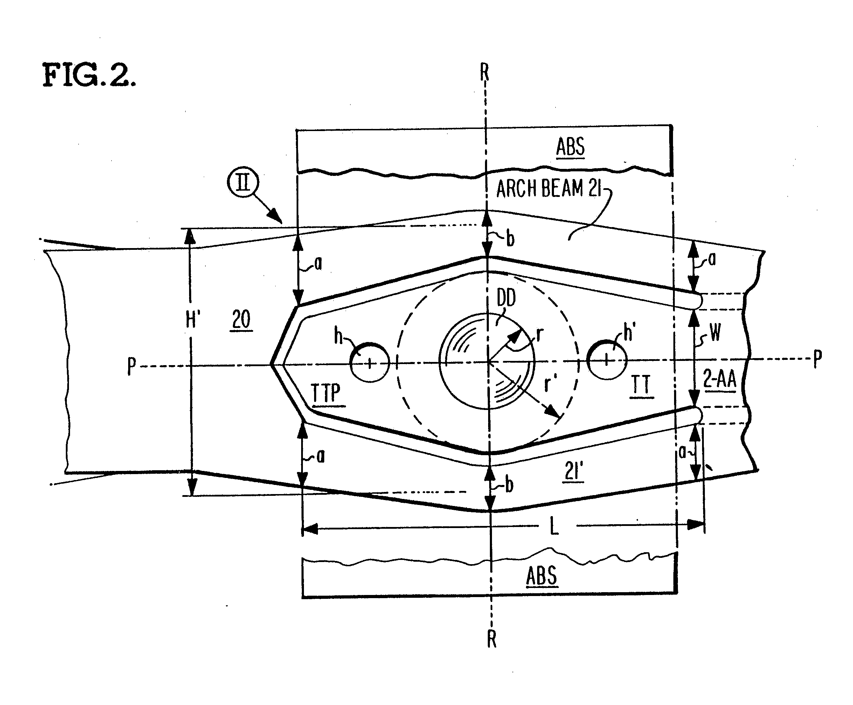

Preferred Embodiment (FIG. 2):

One embodiment of an "arched flexure" design according to the invention is shown in FIG. 2 as "arch flexure" II, wherein the size and shape of the flexure tongue TT and those of the flanking flexure beams 21, 21' are modified (flexure II being the same as flexure I in FIG. 1, except where otherwise specified).

This, and other means discussed herein, will generally be understood as constructed and operating as presently known in the art, except where otherwise specified. And, except as otherwise specified, all materials, methods and devices and apparatus herein will be understood as implemented by known expedients according to present good practice.

Thus, flexure support II is adapted to suspend a slider ABS (as above), and comprises a flexure-leaf (pref. stainless steel) body 20 with a tongue TT cut-out adjacent the distal tip 2—AA of body 20 and with sidebeam-segments 21, 21' flanking tongue TT and joining tip 2—AA to the body 20.

Here, tongue TT will be seen as presenting a considerably increased dimpling-area surrounding dimple DD (the dimple is otherwise the same), presenting a somewhat uniform ring of material (ring of radius γ surrounding dimple DD). Otherwise, the tongue width is about the same (cf. width ω adjacent flexure tip 2—AA about the same as in FIG. 1 embodiment), except about dimple DD, where width is smoothly and symmetrically increased to a maximum along roll axis R—R. Tongue TT terminates in a tip portion TTP with a blunt-nose end and width ω. (The "v-shaped" cutout opposite tip TTP can be replaced by a "square end", etc.).

This new "bulbous" tongue shape will be seen as increasing the area around dimple DD. As a result, dimpling is simpler and better, with considerably less distortion of the tongue (flatness) (more material to draw-from ion the dimpling process). Further, it will be seen as providing enhanced pitch-stiffness (and pitch torsion) and increased bonding area, thus improving bonding of the slider to the flexure.

Also, the use of "arched" beam-segments 21, 21' flanking this "bulbous" tongue, gives advantageous cooperative features (e.g., readily allows bigger, uniform gap about tongue — and this facilitates die-stamping, less bonding difficulty, etc. — see below).

Now flanking this enlarged-width ("bulbous") tongue, the surrounding flexure beams 21, 21' are "arched" somewhat along their length. This helps to maintain "somewhat the same" beam-width, with a reasonably-large separation gap (from tongue TT) kept, as workers will understand. As will be noted in FIG. 2, this results in considerably improved (larger, more uniform) tongue-beam clearance. The increased tongue area and greater tongue clearance will also be seen to enhance and facilitate more reliable, effective bonding, since more adhesive can safely be applied between the slider and the tongue-dimple without danger of "bridging", etc. The resultant increased tongue- clearance reduces the risk of excess adhesive protruding into the gap and interfering with slider compliance.

In addition, to provide for release of air and to accommodate surplus adhesive, relief holes h, h' are provided through tongue TT, preferably on both sides of dimple DD, as will be seen in FIG. 2. (The location, number, size and shape of these holes is a matter of choice).

As a further improvement feature, the "arched" flexure beams 21, 21' are also "necked-down" (narrowed in width) medially to exhibit a prescribed reduced width b along roll-axis R—R (b<a). This will be found surprisingly effective in accommodating more balanced roll (e.g., more balanced "roll moment" along an axis through the load point at center of dimple DD), with little or no "bias roll" — (or predisposition to rotate one way or the other about axis R—R).

Also, the span H' of arch flexure II (that is the distance between beam center lines) is here increased above that of a more conventional "rectangular" flexure (e.g., I in FIG. 1). This is believed to increase resistance to pitch — e.g., a span H' about twice the span H of "rectangular" flexure I will be found to increase pitch-stiffness on the order of 25% for flexure geometry which is otherwise typical.

Results:

The improved manufacturability of the "arched flexure" of embodiment II has already been mentioned (e.g., susceptibility for die-stamping, more tongue material for forming the dimple, more bonding area, more clearance for accommodating surplus bonding material and preventing rubbing against flexure beam segment; also relief holes for release of air and surplus adhesive). More particularly, this embodiment will be seen as providing surprisingly improved "pitch-stiffness" (e.g., during sudden starting and stopping of recording disk surface), and more adequate support during stop-start operations, despite the apparently "simple", "minor" changes in shape and dimensions.

Workers will be especially surprised to see that this allows die-stamping of the part, avoiding the usual, troublesome chemical etching (see above).

This "arch flexure" design not only increases resistance to pitch, but does so without necessarily increasing "roll stiffness". It appears that the moment for roll compliance is more uniformly distributed (more uniform roll compliance) with no unbalancing, asymmetric roll forces to throw one slider rail closer to the disk than the other (e.g., vs "rectangular flexure" I of FIG. 1).

Such a "roll bias" is characteristic of virtually all conventional flexures and presents serious disadvantages. For instance, workers recognize how it typically makes one slider rail fly at a seriously-different height from the other (e.g., variations of 25—50% are not uncommon — something quite undesirable).

Tests were conducted to investigate the dynamic properties of head-arm assemblies using such an "arched flexure", and to compare these with a "rectangular flexure" as in FIG. 1 (e.g., amplitude of detected acoustic energy plotted vs disk rpm). It appeared that a "rectangular flexure" like I of FIG. 1 exhibited a very sharp, massive increase in kinetic energy during disk spin-up: i.e., a first "spike" during "slider takeoff" (frictional drag) and a second during a later "transitional instability" (associated with pitch instability).

By comparision, the "arched flexure" is much more stable, exhibits minimal "energy-spikes", and insignificant instability or flutter. Evidently, this is due to improved "pitch-stiffness" and little or no "roll bias".

Summary:

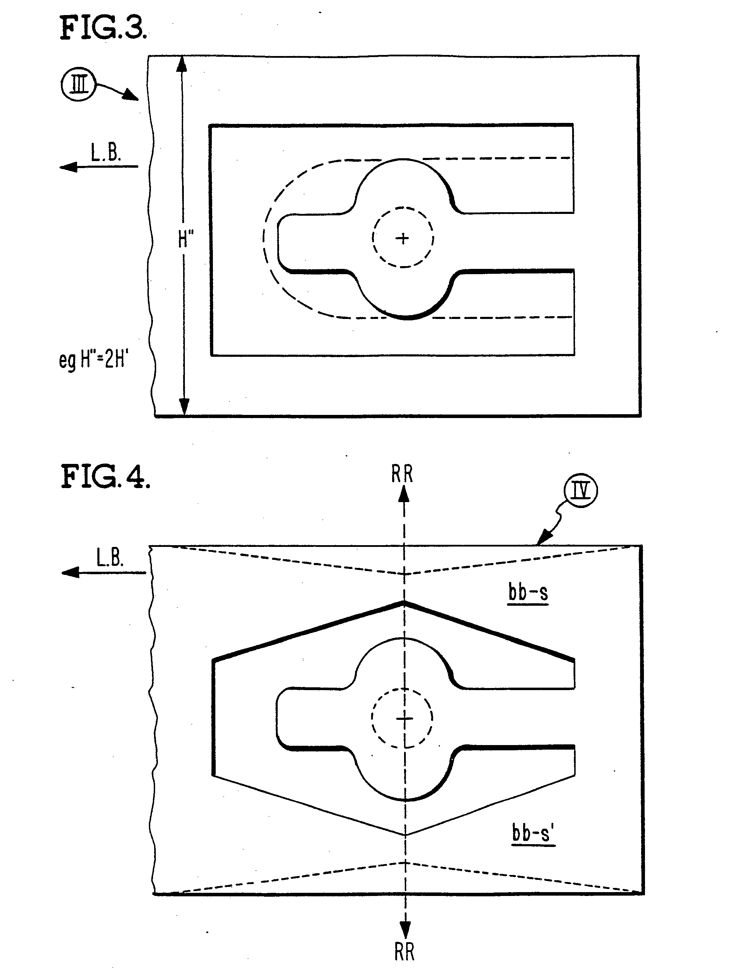

Workers may wonder what results when one simply widens the entire flexure leaf (e.g., twice as wide overall as leaf 10 in FIG. 1). Such is indicated, very schematically, for flexure III in FIG. 3 — with a tongue a bit narrower, proportionately. Here, pitch-stiffness will be increased (though some compliance must be maintained, according to the slider used), but significant, troublesome "roll bias" should be expected.

Thus, flexure III is further modified by necking-down the beam-segments (enlarged cut-out flanking tongue) — as shown in FIG. 4 for flexure IV. Here, like beam-segments bb-s, bb-s' are identically necked-down in width symmetrically, medially of their length — to a minimum width along the roll axis R—R of the flexure IV. This will be understood as performed to effect a prescribed reduction (e.g., elimination) of "roll bias".

Workers will recognize that various kinds of slider can be carried by such an "arch flexure" (e.g., "Winchester", "Micro-Winchester", "Self-Loading, etc.).

**Claims**

1. A flexure mount for carrying a magnetic recording transducer body adapted to be brought into operative relation with a passing record surface, this mount comprising an elongate flexure strip (20) having a distal tip (2—AA), a tongue section (TT) cantilevered back from this tip, and a pair of like beam-segments (21, 21') flanking the tongue section to join said tip to the proximate end of the mount, said tongue section being provided with a dimple (DD) to which said transducer body (ABS) is attached by means of adhesive, characterised in that said beam-segments are each necked-down identically intermediate their length, to exhibit a minimum width along an axis (R—R) through the centre of said dimple transverse to the length axis (L) of said flexure strip, whereby any predisposition for said transducer body to rotate in either direction about said axis is reduced.

2. A mount as claimed in Claim 1, wherein the width of each of said segments decreases continuously from each end towards said axis.

3. A mount as claimed in Claim 1 or Claim 2, wherein the transducer body includes a pair of slider rails and wherein said necking-down is designed and adapted to so reduce roll bias about said axis as to keep the operative slider rail record surface gaps within 5—15% of one another.

4. A mount as claimed in Claim 3, wherein the transducer body is Winchester-type slider.

5. A method of fabricating a flexure mount for carrying a magnetic recording transducer body adapted to be brought into operative relation with a passing record surface, this mount comprising an elongate flexure strip (20) having an elongate flexure strip (20) having a distal tip (2—AA), a tongue section (TT) cantilevered back from this tip, and a pair of like beam-segments (21, 21') flanking the tongue section to join said tip to the proximate end of the mount, said tongue section being provided with a dimple (DD) to which said transducer body (ABS) is attached by means of adhesive characterised in that said beam-segments are each necked-down identically intermediate their length, to exhibit a minimum width along an axis (R—R) through the centre of said dimple transverse to the length axis (L) of said flexure strip, whereby any predisposition for said transverse body to rotate in either direction about said axis is reduced.

## Patentansprüche

1. Federelement-Halterung für einen Magnetaufzeichnungskopf, der in eine Arbeitsstellung gegenüber einer vorbeibewegten Aufzeichnungsträgeroberfläche bringbar ist, mit einem länglichen Federelementstreifen (20), der ein distales Ende (2—AA), einen von diesem Ende zurückweisenden, freitragenden Zungenabschnitt (TT) und ein Paar von gleichen Stegen (21, 21') aufweist, die den Zungenabschnitt umschließen und das distale Ende mit dem proximalen Ende der Halterung verbinden, wobei der Zungenabschnitt mit einer Vertiefung (DD) versehen ist, an der der Magnetkopf (ABS) durch Verklebung befestigt ist, dadurch gekennzeichnet, daß die Stege in der Mitte ihrer Länge identisch in ihrer Breite vermindert sind, um entlang einer Achse (R—R), die quer zur Längsachse (L) des Federelementstreifens durch die Mitte der Vertiefung verläuft, eine Minimalbreite aufzuweisen, damit irgendwelche Fehlausrichtungen des Kopfes durch Rotieren um diese Achse in der einen oder anderen Richtung reduziert werden.

2. Halterung nach Anspruch 1, dadurch gekennzeichnet, daß die Breite jedes der Stege kontinuierlich von den beiden Enden zur Mitte hin abnimmt.

3. Halterung nach Anpsruch 1 oder 2, dadurch gekennzeichnet, daß der Magnetkopf mit einem Paar von Gleitkufen versehen ist und die Breitenverminderung der Stege derart ausgebildet ist, daß die Rollvorspannung um die Achse soweit vermindert wird, daß die sich im Betriebszustand einstellenden Abstände zwischen den Gleitkufen und der Aufzeichnungsträgeroberfläche nur um maximal 5—15% voneinander abweichen.

4. Halterung nach Anspruch 3, dadurch gekennzeichnet, daß der Magnetkopf ein Winchester-Gleitmagnetkopf ist.

5. Verfahren zur Herstellung einer Federelement-Halterung für einen Magnetaufzeichnungskopf, der in eine Arbeitsstellung gegenüber einer vorbeibewegten Aufzeichnungsträgeroberfläche bringbar ist, mit einem länglichen Federelementstreifen (20), der ein distales Ende (2—AA), einen von diesem Ende zurückweisenden, freitragenden Zungenabschnitt (TT) und ein Paar von gleichen Stegen (21, 21') aufweist, die den Zungenabschnitt umschließen und das distale Ende mit dem proximalen Ende der Halterung verbinden, wobei der Zungenabschnitt mit einer Vertiefung (DD) versehen ist, an der der Magnetkopf (ABS) durch Verklebung befestigt ist, dadurch gekennzeichnet, daß die Stege in der Mitte ihrer Länge identisch in ihrer Breite vermindert sind, um entlang einer Achse (R—R), die quer zur Längsasche (L) des Federelementstreifens durch die Mitte der Vertiefung verläuft, eine Minimalbreite aufzuweisen, damit irgendwelche Fehlausrichtungen des Kopfes durch Rotieren um diese Achse in der einen oder anderen Richtung reduziert werden.

## Revendications

1. Elément de support élastique pour recevoir un corps de transducteur d'enregistrement magnétique destiné à coopérer avec une surface d'enregistrement se déplaçant par rapport à la tête, cet élément se composant d'une bande élastique allongée (20) avec une extrémité distale (2—AA), une partie de languette (TT) en porte-à-faux en retour par rapport à cette extrémité et une paire de segments latéraux (21, 21') par rapport à la section en languette pour relier cette extrémité à l'extrémité proche de l'élément de support, la section en languette comportant un bossage (DD) auquel est fixé le corps du transducteur (ABS) avec de la colle, élément caractérisé en ce que les segments latéraux sont diminués chacun de manière identique au milieu de leur longueur pour avoir une largeur minimale suivant l'axe (R—R) passant par le centre du bossage transversalement par rapport à l'axe longitudinal (L) de la bande élastique pour diminuer toute tendance du corps du transducteur à tourner dans l'une ou l'autre direction autour de cet axe.

2. Elément de support selon la revendication 1, caractérisé en ce que la largeur de chaque segment diminue en continue à partir de chaque extrémité en direction de l'axe.

3. Elément de support selon la revendication 1 ou 2, caractérisé en ce que le corps du transducteur comporte une paire de rails de tête flottante et la diminution est conçue et prévue de manière à réduire les contraintes de roulis autour de l'axe pour conserver les intervalles entre les rails de la tête flottante et de la surface d'enregistrement à moins de 5—15% l'un par rapport à l'autre.

4. Elément de support selon la revendication 3, caractérisé en ce que le corps du transducteur est une tête flottante de type Winchester.

5. Procédé de fabrication d'un élément de support élastique pour recevoir un corps de transducteur d'enregistrement magnétique destiné à coopérer avec une surface d'enregistrement mobile par rapport à ce corps, cet élément de support se composant d'une bande élastique allongée (20) ayant une extrémité distale (2—AA), une section en forme de languette (TT) en porte-à-faux en retour par rapport à cette extrémité et une paire de segments latéraux (21, 21') de part et d'autre de la section en languette pour réunir cette extrémité à l'extrémité proche de l'élément de support, la section en languette comportant un bossage (DD) auquel est fixé le corps du transducteur (ABS) avec de la colle, procédé caractérisé en ce que les éléments latéraux sont diminués chacun de manière identique entre leur extrémité pour avoir une largeur minimale suivant l'axe (R—R) passant par le centre du bossage et qui est transversal à l'axe longitudinal (L) de la bande élastique, pour diminuer toute tendance du corps du tranducteur à tourner dans l'une ou l'autre direction autour de cet axe.

FIG.1

FIG.2.

ABS

ARCH BEAM 21

ABS

TT

TTP

ARCH BEAM 21

2-AA

W

a

a'

l'

b

b

a

a

r

r'

DD

h'

h

L

H'

H

20

P

R

R

P

II

# FIG.3.

Ⅲ

L.B.

H"

eg H"=2H'

# FIG.4.

RR

L.B.

Ⅳ

bb-s

bb-s'

RR